# EUROPEAN PATENT APPLICATION

(11) **EP 2 610 762 A1**
(43) Date of publication of application: **03.07.2013**
(21) Application number: 12168649.7
(22) Date of filing: 21.05.2012
(51) Int. Cl.: G06F 17/30

(54) **Database version management system**

(30) Priority: 29.12.2011 IN MU36912011
(71) Applicant: Tata Consultancy Services Limited, 400021 Mumbay (IN)
(72) Inventor: Iyer, Harish Sivasubramanian, 400 093 Maharashtra (IN); Dash, Hemanta, 751024 Orissa (IN); Anjan, Gururaj, 751024 Orissa (IN)
(74) Representative: Jansen, Cornelis Marinus

(57) **Abstract**

Systems and methods for managing versions of a database are described herein. The system (102) includes a worklist module (108) configured to receive a plurality of change requests and generate a first worklist based on them. The plurality of change requests include instructions for modifying one of a database structure and/or master data of the database (103). One or more change requests may be approved from the first worklist. The worklist module (108) generates a second worklist comprising the approved change requests. One or more change requests included in the second worklist are executed to create a version of the database (103). A versioning module (110) may maintain and track a plurality of versions within the database (103). A comparison module (212) may allow comparison and synchronization of the plurality of versions of the database (103) based on the results of comparison and needs in specific environment.

## Description

### The invention

### TECHNICAL FIELD

The present subject matter relates, in general, to database management systems, and in particular, to a system for managing a plurality of versions of a database.

### BACKGROUND

Generally, database version management systems are used to track and manage changes made to a software application associated with a database. These changes may be made by multiple users. For example, in a development stage, multiple developers can make changes in the software application for enhancing capabilities of the software application, leading to changes in the associated database. In another example, the changes can also be made during different stages of the software application, such as when the software application is in a testing stage, to address any defects identified during testing of the application, a testing team may propose changes in the software application and associated database. The changes in database can be associated with the database structure as well as master/seed data used by the software application.

Conventionally known tools, namely, concurrent version systems (CVS), subversion (SVN), and the like, are available for managing various versions of software applications. These tools enable tracking changes in a source code every time a change is made to the source code of the software application.

Further, different versions of a database can also be tracked by various version management tools. Such tools facilitate tracking the changes made by multiple users in the database. Generally, the changes are made to the structure of the database by using data definition language (DDL) and data manipulation language (DML). The versions of the database may also get created when the database is being used in different environments. For example, changes may be made to a database in a development environment to enhance its performance or the functionalities. These changes may result in creation of a new version of the database that may be used in a testing environment. To track the changes made across different versions, such as a first version and a second version of the database, the first version is compared with the second version of the database. Comparison between the first and the second versions provide differences between the two versions. These differences are maintained manually as the DDL and DML scripts in a file. The file may be maintained separately from the database, for instance, in a different database. Using the manually prepared files for managing versions of the database may lead to creation of numerous files, for example, when database structures are varied in different environments, and may thus increase the costs and resource requirements associated with database. This practice is more like versioning the database information into flat files which is disconnected from the related database and has chances of resulting into error.

### SUMMARY

This summary is provided to introduce concepts related to database version management systems, which are further described below in the detailed description. This summary is neither intended to identify essential features of the claimed subject matter nor is it intended for use in determining or limiting the scope of the claimed subject matter.

In an embodiment, the present subject matter discloses systems and methods for managing a plurality of versions of a database. In an implementation, the system may include a worklist module and a versioning module. The worklist module may be configured to receive a plurality of change requests from at least one requester. The plurality of change requests may include instructions for modifying at least one of a database structure and master data of the database. Further, the worklist module may generate a first worklist based on the plurality of change requests. The first worklist may be provided to at least one reviewer for approval. The worklist module may also generate a second worklist comprising one or more change requests that may be approved by the at least one reviewer based on the first worklist. The second worklist may be provided to at least one administrator for executing one or more change requests included in the second worklist.

In addition, the worklist module may execute the one or more change requests included in the second worklist. The execution of each of the change requests included in the second worklist may create a different version of the database structure and/or master data. The versions may be maintained within the database. In said embodiment, the versioning module may be configured to track a plurality of versions of the database.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.
Fig. 1 illustrates a network environment implementing a database version management system, in accordance with an embodiment of the present subject matter.
Fig. 2 illustrates components of the database version management system, in accordance with an embodiment of the present subject matter.
Fig. 3 illustrates an exemplary method for providing a workflow for managing a plurality of change requests relating to a database version, in accordance with an embodiment of the present subject matter.
Fig. 4 illustrates a method of managing versions of the database, in accordance with an embodiment of the present subject matter.

### DETAILED DESCRIPTION

A database typically includes data and their relationships related to an application, such as a software application, and may go through various changes at different stages and in different environments. The data may be stored in the database in accordance to a specific format or structure, known as a database structure. For instance, in a database associated with a software application for creating an attendance sheet, data, such as name, address, and employee ID may be stored in different data blocks, according to a predefined database structure.

Further, a database environment may refer to different phases or stages in which the database may be used. Examples of the database environments may include, but are not limited to, a development environment, a testing environment, a staging environment, a production environment, and a performance environment. In an example, when more than one developer works on a single database, any change made in the structure of the database by one of the developers may affect the work done by other developers. To avoid this, different copies of the database may be created, which may be provided on local machines of the developers. This may enable a developer to make changes in his copy of the database without affecting the work done by other developers. Database versions are relevant even for single developer projects/applications where different versions come into existence at different points of time.

Generally, changes made in the database structure are in the form of a script that may be executed by multiple developers. Further, when a change is made in the database structure, a new version of the database structure gets created. In certain circumstances, there may be a need for several developers to work on the same version of the database structure, thus requiring that any change made by any of the developers is reflected in the copies of the other developers as well. Accordingly, the other developers may make appropriate structural changes to their copies of the database either by executing the script or by making the changes manually. For this, a developer who makes a change may need to maintain a file that lists the changes made by him to the database structure and communicate the same to the others.

A new version of a database may also get created when there is any change in the master data of the database. The master data is the core data that is essential for operations of a specific organization. Examples of the master data for an organization may include customers, employees vendors, policies, and the like. The master data may include objects that are used in different applications across the organization, along with their associated metadata, attributes, definitions, roles, and the like. Additionally, the versions may be created in different or same database environments, thus requiring the changes to be reflected across various database environments, leading to increase in the number of files. Thus, the conventional method of creating, managing and synchronizing various versions of the database are inconvenient and provide no mechanism for tracking and maintaining the various versions.

In one approach, a revision number may be associated with each version of the database structure to distinguish an updated version of the database structure from an older version. The revision number may facilitate retrieval of information related to each version of the database structure, such as when were the changes made, which developer made the changes, and what kind of changes were made in the database structure. However, the developers may be required to associate the revision numbers with each version of the database structure and maintain the revision numbers in the central repository accessible to all developers. However, since the developers maintain the file manually, such an approach may be inconvenient and time consuming for the developers. Further, manually updating the file by entering the changes may not always be accurate, as a developer may miss out on some information while updating the file. Manually updating the file may thus lead to discrepancies while tracking various versions of the database structure.

In an alternative approach, to track various versions of the database structure, triggers may be used. A trigger may be understood as a code that the database structure should automatically execute whenever a certain type of operation is performed on the database. The triggers may analyze details about any changes in a structure of the database and report the changes to a database administrator (DBA). The details may include information, such as when the changes were made, information about users who made the changes, and the like. The triggers are thus typically defined to execute either before or after any operation, such as an insert, an update, or a delete operation, to analyze the changes made during the particular operation. However, the triggers may get executed every time an operation is performed on the database, irrespective of whether the operation relates to a change in the database structure or not. The trigger may thus act as an overhead for a system using the database, making the system slow, thus, affecting performance of the system.

In accordance with the present subject matter, system and methods for managing a plurality of versions of a database are described herein. The system and methods described herein provide for tracking changes made to a database and allow managing and synchronizing various versions of the database including structure and master data. Further, the system may enable managing versions of more than one database, such as in case of an organization where versions of multiple databases may be associated with one or more applications.

In one implementation, a plurality of users may be classified based on various roles associated with the database and assigned to the users. The roles, for example, may be associated with respective privileges for facilitating the plurality of users to perform operations in relation to the database. For instance, the users may be assigned the role of a requester, a reviewer, or an administrator. Classifying the users according to the roles facilitates in providing access of the database to the plurality of users in accordance with the roles assigned.

In one embodiment, the requester may submit a plurality of change requests to the database. The plurality of change requests may include instructions for modifying at least one of a data dictionary, database structure, master data, and reference data of the database. Examples of the modifications may include, but are not limited to, any change in the database model, adding content in the master data and/or reference data, deleting content from the master data and/or reference data, and manipulating content of the master data and/or reference data.

In one implementation, the plurality of change requests submitted by the requester may be tracked, for example, based on a revision number associated with each of the plurality of change requests. The revision number may include information related to the corresponding change request, for example, when the changes were requested, information about the requester submitting the changes, kind of changes requested, and the like. The plurality of change requests along with the associated revision numbers may be stored within the database thus facilitating easy retrieval of the stored change requests.

The plurality of change requests submitted by the requester may be initially provided as a first worklist to the reviewer. The reviewer may be assigned a capability of approving the plurality of change requests submitted by the requester. For instance, the reviewer may parse the first worklist containing the plurality of change requests. The first worklist may thereafter be validated based on predetermined rules, before being approved by the reviewer. In an embodiment, the validation may be based on one or more validation parameters, such as stakeholder defined validation parameters.

A second worklist having the approved change requests may be subsequently provided to the administrator. In one implementation, the administrator may be capable of executing the approved change requests based on the second worklist. The first and the second worklist may thus facilitate in streamlining submission, review, and execution of the change requests and allow tracking of the same. In an embodiment, the tracking may also include tracking a processing time of each of the plurality of change requests in accordance with a service level agreement parameter.

Further, executing one or more approved change requests in the database may create a new version of the database. A plurality of versions of the database thus created may be stored within the database. In one implementation, details about the various versions, such as the change requests executed on the database, which user submitted the change requests, alterations that may have happened in the database due to the execution of the change requests, and the like may be stored as a revision history within the database.

In one implementation, the plurality of versions of the database may be created in different environments, such as a development environment, a testing environment, a production environment, and a performance environment. Further, the system and methods may also facilitate synchronization of at least two versions of the database from the plurality of versions. The at least two versions may be compared to obtain a comparison data based on which the at least two versions may be synchronized. In an embodiment, a first version and a second version of the database may be compared to obtain a database comparison data (hereinafter referred as comparison data). The comparison data may include changes in the database structure and/or master data, such as addition of columns, deletion of columns, modification of relations between two tables, and the like. In an embodiment, the comparison may be based on a request submitted by a user to compare at least two versions from amongst the plurality of versions of the database.

Based on the comparison data, changes may be applied to the second version of the database to synchronize the second version with respect to the first version. In an exemplary embodiment, the first and the second versions may be created by users belonging to a same environment. In an alternative embodiment, the first and the second versions may be created by users belonging to environments. In another embodiment, each of the plurality of versions may be associated with applications, such as customer relationship management (CRM), enterprise resource planning (ERP), and payroll management applications. The system of the present subject matter may cater to multiple database technologies for different applications. However, the different environments of a single database corresponding to a particular application may be built on the same technology. For example, a CRM application in the development environment, the testing environment, the production environment, and the like needs to be in the same in database technology, for example, Oracle®. Similarly, in another example, the system may facilitate managing versions of a DB2 database while being used in association with the ERP application in the development environment, the testing environment, the production environment, and the like.

The present subject matter thus provides an efficient system and method for management of the plurality of versions of the database in terms of time and performance. Further, the system and methods of the present subject matter may be configured to provide a streamlined process of receiving change requests that may be reviewed and approved by the administrator. Furthermore, the present subject matter may enable the administrator to compare different versions of the database from a single interface. The administrator may also be able to selectively apply relevant changes to a version of the database.

These and other advantages of the present subject matter would be described in greater detail in conjunction with the following figures. While aspects of described systems and methods for managing versions of a database can be implemented in any number of different computing systems, environments, and/or configurations, the embodiments are described in the context of the following exemplary system(s).

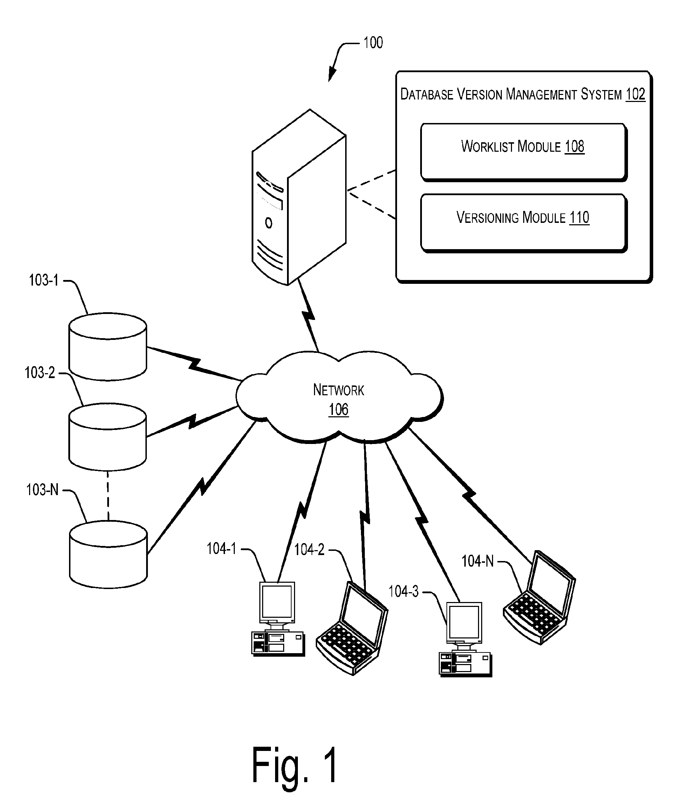

Fig. 1 illustrates a network environment 100 implementing a database version management system 102, hereinafter referred as system 102, in accordance with an embodiment of the present subject matter. In said embodiment, the network environment 100 includes the system 102 configured to manage a plurality of versions of one or more databases, such as 103-1, 103-2...103-N, collectively referred to as database 103, that may result due to changes in the database structure or master data of the database 103. The versions of the database 103 resulting due to the changes in the database structure or master data are hereinafter referred to as versions of database structure. The system of the present subject matter may cater to multiple database technologies for different applications. However, the different environments of a single database corresponding to a particular application may be built on the same technology. For example, a CRM application in the development environment, the testing environment, the production environment, and the like needs to be in the same in database technology, for example, Oracle®. Similarly, in another example, the system may facilitate managing versions of a DB2 database while being used in association with the ERP application in the development environment, the testing environment, the production environment, and the like.

In an implementation, the system 102 communicates with the database 103 over a communication network, such as an enterprise network or a local area network. In another implementation, the system 102 may be connected directly with the database 103. It would be appreciated by those skilled in the art that system 102 and the database 103 may be implemented in the same or different computing systems. The database 103 may be based on different database technologies. Examples of the database technologies may include, but are not limited to, Oracle®, SQL Server®, and Microsoft® Access®. In addition, the plurality of versions of a database may be configured to support multiple applications that may include a payroll application, an enterprise resource planning (ERP), a customer relationship management (CRM), a human resource management (HRM) application, and the like.

The system 102 may be implemented in a variety of computing systems, such as a laptop computer, a desktop computer, a notebook, a workstation, a mainframe computer, a server, a network server, and the like. Further, the system 102 may be connected to a plurality of user devices, such as 104-1, 104-2, 104-3,...,104-N, collectively referred to as the user devices 104 and individually referred to as a user device 104. Examples of the user devices 104 include, but are not limited to, a desktop computer, a portable computer, a mobile phone, a handheld device, and a workstation. The user devices 104 may be used by database analysts, programmers, developers, data architects, software architects, module leaders, projects leaders, database administrator (DBA), stakeholders, and the like to communicate with the system 102.

As shown in the figure, such user devices 104 are communicatively coupled to the system 102 over a network 106 through one or more communication links for facilitating one or more end users to access and operate the system 102. In one implementation, the network 106 may be a wireless network, a wired network, or a combination thereof. The network 106 may also be an individual network or a collection of many such individual networks, interconnected with each other and functioning as a single large network, e.g., the Internet or an intranet. The network 106 may be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 106 may include a variety of network devices, including routers, bridges, servers, computing devices, storage devices, and the like.

As mentioned earlier, the system 102 is configured to manage a plurality of versions of a database structure and/or master data. The database structure may be defined as organization of data within the database 103. The database structure may also include a collection of attributes. For example, to maintain details of employees of an organization, various attributes such as employee first name, employee last name, employee id, and employee date of birth may be identified. Collection and arrangement of these attributes in a database may form the database structure. Examples of the organization may include an IT company, a product manufacturing company, a telecommunication company, or other large conglomerates. It will also be appreciated by a person skilled in the art that the organization may be any company involved in any line of business.

In one implementation, the system 102 may include amongst other modules a worklist module 108 and a versioning module 110. The worklist module 108 may be configured to receive a plurality of change requests submitted by a plurality of users. In an embodiment, the plurality of users may be assigned one or more roles associated with the database 103. For purposes of discussion only and not as limitation, the one or more roles may include a requester, a reviewer, and an administrator. In one implementation, the requester may be a developer, a designer, a data architect, a module leader, and the like. In one implementation, the reviewer may be a software architect, a project leader, and the like. Further, the administrator may be a database administrator (DBA).

In one implementation, privileges may be associated with each of the one or more roles assigned to the plurality of users. The privileges facilitate the plurality of users to perform operations in relation to the database 103. For example, the privileges determine whether or not a user can add or delete information in the database 103. The privileges may define how a user having a specific role may interact with the database 103.

In operation, the worklist module 108 may be configured to receive the plurality of change requests from the requester. The privileges associated with the requester may enable the requester to submit change requests. The requester may submit the plurality of change requests through the user device 104. A change request may refer to an instruction to perform a modification in the database structure and/or the master data. Accordingly, the plurality of change requests may include instructions for modifying at least one of a data dictionary, database structure, master data, and reference data of the database 103. Examples of the instructions for modifying the database structure and the data (master and reference) may include an instruction for adding data into the database structure, removing a column from a table, modifying relation between two tables, and the like. Further, changes in the database structure may include changes in logical database objects as well as changes in physical database objects. Examples of the logical database objects may include, but are not limited to, tables, columns, primary keys, and constraints. Examples of physical database objects may include, but are not limited to, databases, table spaces, and indexes.

The data dictionary may contain a definition of each database structure and the various types of data elements defined by the system 102. For instance, each data element, its source, its name, its meaning, its relation with other data items, and the like may be stored in the data dictionary. Accordingly, any changes made in the database structure will get reflected in the data dictionary. In an implementation, the data dictionary may be integrated with the system 102. In an alternative implementation, the data dictionary may be external to the system 102.

As mentioned previously, a version of the database 103 may be created when users perform changes in the database 103. It will be appreciated by a person skilled in the art that the plurality of versions of the database 103 may belong to different environments in which the database 103 may exist. Examples of the environments may include, but are not limited to, a development environment, a testing environment, a staging environment, a production environment, and a performance environment.

In one embodiment, the worklist module 108 may be configured to generate various worklists pertaining to processing of the plurality of change requests. In said embodiment, the worklist module 108 may generate a first worklist that may include the plurality of change requests. The first worklist may be provided to the reviewer for approval of change requests in the first worklist. Furthermore, the worklist module 108 may be configured to facilitate generation of a second worklist having a set of approved change requests. The set of approved change requests may be obtained from the first worklist based on the change requests approved by the reviewer.

In one implementation, the reviewer may seek approval from a stakeholder before approving any of the change requests from the set of approved change requests. Further, the second worklist may be provided to the administrator for executing one or more approved change requests from the set of approved change requests. The administrator may execute the one or more approved change requests from the set of approved change requests based on the second worklist. The execution of the one or more approved change requests from the set of approved change requests may result in creation of a plurality of versions of the database 103. In addition, each of the plurality of versions of the database 103 may be maintained within the database 103.

Further, the versioning module 110 of the system 102 may be configured to track the plurality of change requests received from the user devices 104. In one implementation, the system 102 may be configured to track the plurality of change requests by associating a revision number with each of the plurality of change requests received from the requester. The versioning module 110 may also facilitate storing each of the plurality of change requests along with the associated revision numbers within the database 103. Accordingly, the revision numbers may enable tracking of the plurality of change requests. Further, the versioning module 110 may be configured to tag change requests together belonging to same work item of the database 103 by assigning similar revision numbers.

In an embodiment, the versioning module 110 may also be configured to track a processing time of the each of the plurality of change requests in accordance with a service level agreement (SLA) parameter. Typically, the SLA is a collaborative written agreement between a user and a service provider which may define key targets and responsibilities on both sides. In an exemplary embodiment, the versioning module 110 may be configured to provide a status of each of the plurality of change requests along with the revision number of the change requests.

Further, the versioning module 110 may be configured to maintain the plurality of versions of the database 103 in the database 103. In an embodiment, the versioning module 110 may be configured to compare any two versions of the plurality of versions, say, a first version and a second version of the database 103. The first version and the second version may not be a first and a second version in the order of creation but may refer to any two versions selected from the plurality of versions. In an embodiment, the first version and the second version may be compared on receiving a compare request. The compare request may be submitted by any of the plurality of users associated with the database 103. The system 102 may further facilitate synchronizing versions of a database 103 based on the tracked change requests. Synchronization of the versions may ensure migration of various changes across the versions in a consistent manner.

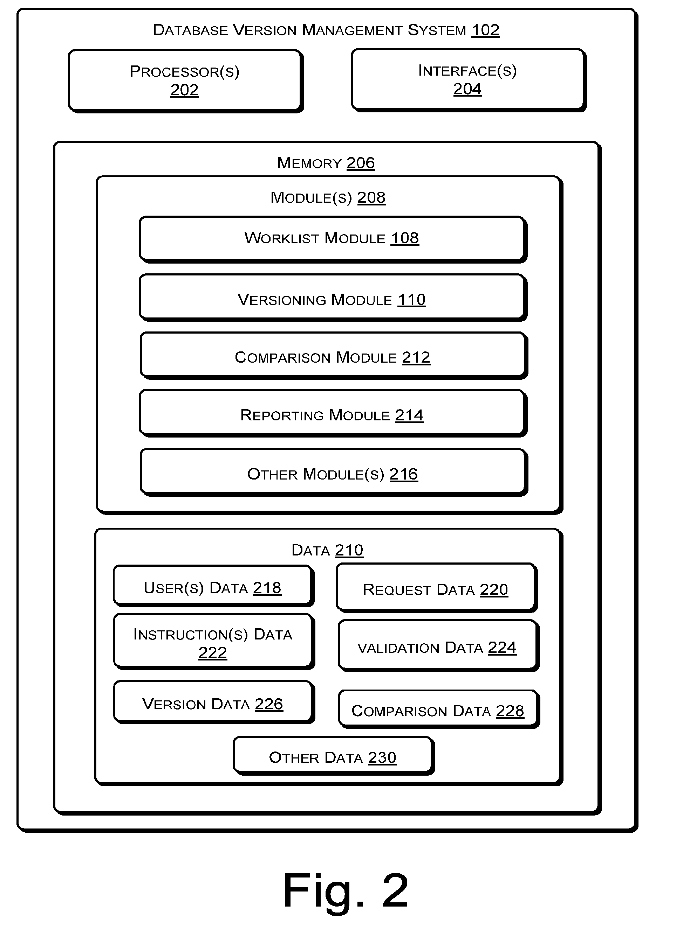

Fig. 2 illustrates components of the system 102, in accordance with an embodiment of the present subject matter. In one embodiment, the system 102 includes a processor(s) 202, an interface 204 and a memory 206 coupled to the processor(s) 202. The processor(s) 202 may be implemented as one or more microprocessors, microcomputers, microcontrollers, digital signal processors, central processing units, state machines, logic circuitries, and/or any devices that manipulate signals based on operational instructions. Among other capabilities, the processor(s) 202 are configured to fetch and execute computer-readable instructions stored in the memory 206.

The interface 204 may include a variety of software and hardware interfaces, for example, a web interface, a graphical user interface, etc., allowing the system 102 to interact with the user devices 104. Further, the interface 204 may enable the system 102 to communicate with other computing devices, such as web servers and external data servers (not shown in figure). The interface 204 may facilitate multiple communications within a wide variety of networks, and protocol types, including wired networks, for example, LAN, cable, etc., and wireless networks such as WLAN, cellular, or satellite. The interface 204 may include one or more ports for connecting a number of devices to each other or to another server.

The memory 206 can include any computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes. In one embodiment, the memory 206 includes module(s) 208 and data 210. The module(s) 208, amongst other things, includes routines, programs, objects, components, data structure, etc., that perform particular task or implement particular abstract data types.

In one implementation, the modules 208 may include the worklist module 108, a versioning module 110, a comparison module 212, a reporting module 214, and other modules 216. The other modules 216 may include programs or coded instructions that supplement applications and functions of the system 102. It will be appreciated that such modules may be represented as a single module or a combination of different modules. Additionally, the data 210 serves, amongst other things, as a repository for storing data fetched, processed, received and generated by one or more of the modules 208. In one implementation, the data 210 may include, for example, user(s) data 218, request data 220, instruction(s) data 222, validation data 224, version data 226, comparison data 228, and other data 230. In one embodiment, the data 210 may be stored in the memory 206 in the form of data structures. Additionally, the aforementioned data can be organized using data models, such as relational or hierarchical data models.

As mentioned earlier, the system 102 may be accessed by a plurality of users using the user devices 104. In one implementation, different roles may be assigned to the plurality of users. The different roles may include developers, data architects, software architects, module leaders, projects leaders, database administrator (DBA), and stakeholders. It will be evident to a person skilled in the art that the different roles will be associated with a database, the versions of which are being managed by the system 102. Further, privileges may be associated with each role assigned to the plurality of users. The privileges may provide access controls to the plurality of users based on the roles assigned to the plurality of users. Furthermore, the privileges may restrict access to the modules 208 and/or the data 210, based on the roles associated with the plurality of users. In one implementation, various details pertaining to the plurality of users, such as login credentials, access permissions, and personal details may be stored as user(s) data 218.

In an embodiment, the worklist module 108 may be configured to implement a team structure that may include users having pre-determined roles. The pre-determined roles may include roles of the requester, the reviewer, and the administrator. The change requests received from the user devices 104 may be subsequently stored as the request data 220. The request data 220 may store plurality of change requests along with additional information about the plurality of change requests. The information may include user ID, user request date & time, type of change request (insert, modify, delete), a current status of the change request (pending, declined, completed), and the like. Further, status of the plurality of change requests may be maintained along with the request data 220. In an embodiment, a plurality of change requests that may be directed towards one data element may be grouped together. In another embodiment, dependencies among the change requests may also be tracked.

In one implementation, the various instructions may be stored as the instruction(s) data 222. The instruction(s) data 222 may include latest definitions related to the database structure, the master data, and the reference data. The latest definitions may refer to change in current definitions specified by the plurality of users in the plurality of change requests. For example, a record for a plurality of students at a university is maintained in a STUDENTS table. The primary key for the STUDENTS table in this example may be a student's last name. It will be evident to a person skilled in the art that the primary key may facilitate in uniquely identifying each record in a table, such as the STUDENTS table. Further, a user may raise a request for changing the primary key from the last name to a student's unique ID number. In this example, the instruction(s) data 222 may store the new definition of the primary key defined by the user. In one embodiment, the instruction(s) data 222 may be temporarily stored in the database 103. Further, the definitions stored in the instruction(s) data 222 may get synchronized with the database 103 at regular intervals.

It will also be appreciated by a person skilled in the art that the change requests may be based on requirements that are provided by a subject matter expert (SME), design configurations defined by a developer, and the like. Further, the requester may only submit the change requests from the user device 104 and may not have the privilege of executing the change requests. The worklist module 108 may be configured to generate a worklist, referred to as the first worklist, comprising the change requests submitted by the requester through the user device 104. Further, the worklist module 108 may provide the first worklist to the reviewer for his approval. The reviewer may be able to view the first worklist via a computing device, such as the user device 104. The reviewer may validate and approve a set of change requests from the list of change requests. To approve a change request, the reviewer may review the first worklist before validating one or more change requests. In one embodiment, the worklist module 108 may facilitate the reviewer to parse the first worklist and apply pre-configured rules to validate the change requests.

Validation of a change request may be based on one or more validation parameters specified and stored as the validation data 224 in the system 102. In one implementation, the validation data 224 may include stakeholder defined validation parameters. These parameters may refer to the parameters based on requirements of a stakeholder. The stakeholder may refer to a party that may affect or may be affected by actions of an organization as a whole. Examples of the stakeholders may include, but are not limited to, employees, management of the organization, shareholders, clients, and investors. Each stakeholder may have particular requirements that the system 102 may be configured to address. As mentioned herein earlier, the stakeholder may be connected with the system 102 by means of the user device 104 to validate the set of change requests approved by the reviewer. Accordingly, before approving the change requests, the reviewer may need to determine whether the stakeholders are in agreement to the approved change requests. The reviewer may be provided the privileges of approving the set of change requests from the first worklist.

In one implementation, the worklist module 108 may be configured to generate a worklist, referred to as the second worklist, of the approved set of change requests. The second worklist may include the set of approved change requests, i.e., one or more of the change requests of the first worklist that may be approved by the reviewer. Further, the second worklist may be provided to the administrator, such as the DBA through the user device 104. In one implementation, the DBA may have the privilege of creating tables, such as a transaction table, a reference table, and a relational table, in the database 103. Further, the system 102 may facilitate the DBA to define access rights of each of the tables to the plurality of users. The DBA may assign read/write access and create/delete access of the tables to the plurality of users. In one implementation, the DBA may re-assign the rules and privileges provided to the plurality of the users. In one implementation, the system 102 may facilitate the DBA to apply the change requests either individually or in groups. For example, the change requests directed towards similar work items of the database 103 may be executed as a group.

The system 102 thus provides a workflow for managing the plurality of change requests in a systematic manner. Since various change requests are collated into worklists, managing the change requests may be performed in a time efficient manner.

In one implementation, the system 102 may facilitate the DBA to execute one or more approved change requests from the set of approved change requests based on the second worklist using the user device 104. The execution of the one or more approved change requests from the set of approved change requests may create a plurality of versions of the database 103. In one implementation, the plurality of versions of the database 103 may be maintained within the database 103 and are stored as the version data 226.

In another implementation, the system 102 may facilitate in defining a custom workflow for processing the change requests submitted by the plurality of users. For example, in case of small organizations, where team members may not be assigned the roles of a requester, a reviewer, and an administrator, the system 102 may facilitate customizing the workflow. The system 102 may be configured to assign the functionalities of multiple roles to a single user.

As described earlier, the versioning module 110 may be configured to track each of the change requests received from the requester. To track a change request, the versioning module 110 may associate an identifier, such as a revision number with the each of the change requests. A person skilled in the art will appreciate that the revision numbers will be unique for each of the change requests. Further, the versioning module 110 as provided in the present implementation may facilitate storing each of the change requests along with the associated revision numbers within the database 103. In one implementation, the change requests along with the respective revision numbers may be stored in the request data 220. The revision numbers may facilitate tracking of the plurality of change requests. Further, the versioning module 110 may be configured to tag change requests together belonging to same work item of the database 103 by assigning similar revision numbers.

In an embodiment, the versioning module 110 may also be configured to track a processing time of the each of the change requests in accordance with a service level agreement (SLA) parameter. Typically, the SLA is a collaborative written agreement between a user and a service provider which may define key targets and responsibilities on both sides. Further, the versioning module 110 of the system 102 may also be configured to track the response time taken for processing a change request. For example, a processing time of 48 hours for a change request implies that a change request may either need to be approved for execution or rejected within 48 hours. In the present example, the change request may be tracked by the versioning module 110 using the revision number associated with the change request. In an exemplary embodiment, the versioning module 110 may be configured to provide a status of the change request along with the revision number of the change request. As mentioned earlier, status information of the change requests may be stored in the request data 220. For example, if the DBA has not yet executed a change request, a PENDING status may be associated with the change request. Further, if the reviewer has rejected a change request after parsing through the first worklist containing all of the change requests, a REJECTED status may be associated with the change request. Likewise, a change request which has been successfully executed by the DBA may reflect a COMPLETED status.

As mentioned earlier, execution of the one or more approved change requests may result in creation of the plurality of versions of the database 103. The plurality of versions of the database 103 may be maintained within the database 103. In an implementation, the versioning module 110 may be configured to maintain the plurality of versions of the database 103 in the database 103. Information related to the plurality of versions may be stored as the version data 226. In an embodiment, the versioning module 110 may be configured to compare any two versions of the plurality of versions, say, a first version and a second version of the database 103. In an embodiment, the first version and the second version may be compared on receiving a compare request. The compare request may be submitted by any of the plurality of users associated with the database 103.

In one implementation, the comparison module 212 may be configured to compare a plurality of versions of the database 103. A version of the database 103 may be created due to execution of at least one change request of the second worklist on the database 103 or may otherwise previously exist. As previously described, the change request may include instructions for modifications in at least one of a data dictionary, database structure, master data, and reference data. The versioning module 110 may be configured to track the plurality of versions of the database 103. In one implementation, the versioning module 110 may track the plurality of versions by tracking the change requests executed on the database 103 for creating the plurality of versions of the database 103.

In an embodiment, the comparison module 212 may further be configured to generate a database comparison data (hereinafter referred as comparison data) based on the comparison of the first and the second versions. In said embodiment, the comparison data may be generated by the system 102 at run-time. Further, the comparison data may be stored within the database 103 as comparison data 228. In another embodiment, the system 102 may be configured to export the comparison data 228 from the system 102. For example, a user of the system 102 may share the comparison data 228 with other users. The comparison data 228 may also be provided for review, documentation, and the like. For example, in one embodiment, the system 102 may be configured to email reports based on the comparison data 228 to various stakeholders.

Further, the comparison data 228 may include details about comparisons between various versions of database 103, such as the differences between the versions being compared; the versions of database 103 themselves, stages of comparison, such as development, production, and testing. Further, the first version and the second version of the database 103 may be selectively compared. For example, a user may select tables to be compared between two versions of the database 103.

In one implementation, the comparison module 212 may obtain differences based on the comparison of the first version and the second version of the database 103. These differences may facilitate a user to determine how the first version differs from the second version. In an embodiment, the differences may be obtained as a DDL script. The comparison data 228 may enable synchronization of the first version and the second version of the database 103. In one example, based on the comparison data 228, the comparison module 212 may select change requests from the plurality of changes. As described above, all change requests may be stored in the request data 220; accordingly, the selected change request may be retrieved from the request data 220. The selected change requests may then be executed by the comparison module 212 on the second version of the database 103 to synchronize the first and the second versions based on the comparison data 228.

In one implementation, comparison of the first version and the second version may refer to comparison between the data structure and data (master and reference) of the first version and the second version. Accordingly, the comparison of the first and the second version may provide a comparison data that may include differences between the first and the second version. In one implementation, the comparison data may be provided as a differential script which may also get stored within the database 103 at the comparison data 228. In another implementation, the comparison module 212 may be configured to compare the plurality of versions of the database 103 that may be created in different or same database environments. As previously described, a database environment may refer to different phases or stages in which the database 103 may be used.

In yet another implementation, the comparison module 212 may be configured to compare different versions of the database 103 that may exist in different networks. In said implementation, the comparison module 212 may be configured to retrieve the different versions of the database 103 from the different networks. For example, in case of IT organizations, a database may be developed in one organization and may be used by a second organization. The comparison module 212 may be configured to compare artefacts of two versions of the database 103 that may be created when the database 103 was developed in the first organization and when the database 103 was in use in the second organization. The database 103 may be associated with different domains that may include banking, information technology (IT), and the like.

In one implementation, the comparison module 212 of the system 102 may be configured to compare the different versions of the database 103 even when any one of the database version is not available online. In said implementation, the user may manually provide the comparison details related to the first version and the second version, which may be compared by the comparison module 212. The comparison details may refer to those details that need to enable comparison between the first version and the second version of the database 103. The comparison details may include a portion of the comparison data 228. Further, the comparison data 228 that may be obtained as a differential script may be applied to any version of the database 103 in any environment. In an embodiment, the comparison module 212 may allow the user to view all the differences in compared database versions and execute an automatically generated script to eliminate all or selected differences. Further, the comparison module 212 may be configured to track and maintain versions of different database technologies.

In an embodiment, the reporting module 214 may be configured to generate a report based on the comparison data 228. The reporting module 214 may provide a plurality of options of reporting the comparison data 228 for a user. In an example, the reporting module 214 may be configured to provide the report in a hypertext markup language (HTML) format, an excel format, and the like. Further, the reporting module 214 may provide filters that may facilitate a user to select what content to view from the comparison data 228, such as all contents of the report, only differences between the compared versions, only similarities between the compared versions, contents of the database 103 appearing only in first version, and only in a second version. In an implementation, the reporting module 214 may be configured to indicate the differences, such as by highlighting, between the versions that have been compared to generate the report.

Further, the system 102 of the present subject matter provides a workflow for systematic recording of the changes that may be implemented in a database 103. In addition, the changes that are being executed on the database 103 while promoting a version of the database 103 from one environment to another environment may also be tracked. The system 102 may facilitate selective application of change requests from a plurality of change requests, to any version of the database 103. In this case, all database artefacts associated with a version that is promoted to the next environment, may be pulled and only those changes that are required to be moved to the next environment may be executed. Accordingly, the system 102 may facilitate promotion of a latest version or any previous versions, such as a penultimate or an antepenultimate version of the database 103 from one environment to another environment. The system 102 may enable promoting incremental deployment of versions of the database 103 across different environments.

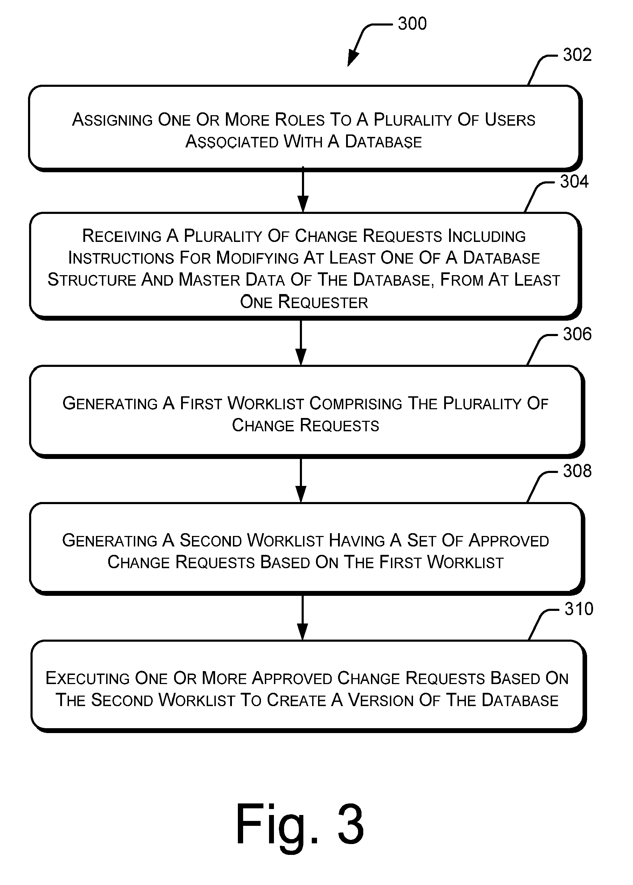

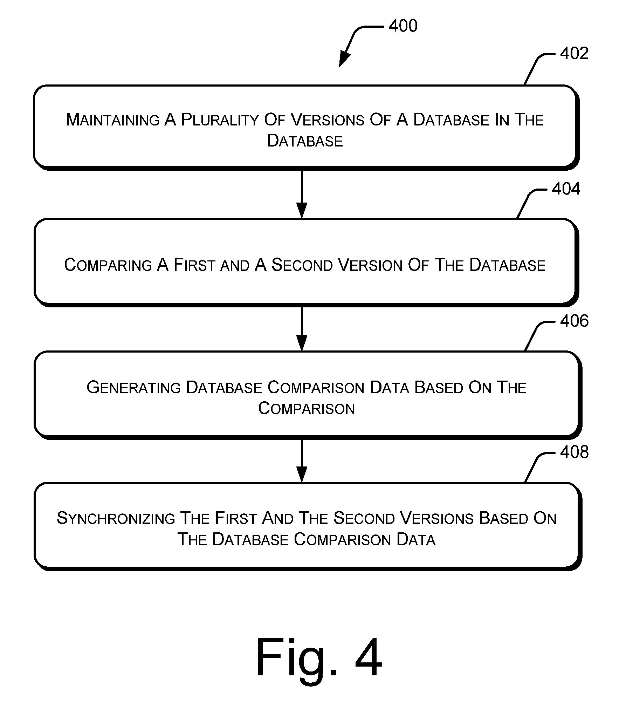

Fig. 3 illustrates an exemplary method 300 of creating versions of a database 103, in accordance with an embodiment of the present subject matter, whereas Fig. 4 illustrates a method managing versions of a database 103, in accordance with an embodiment of the present subject matter. The methods 300 and 400 may be described in the general context of computer executable instructions. Generally, computer executable instructions can include routines, programs, objects, components, data structures, procedures, modules, functions that perform particular functions or implement particular abstract data types. The methods 300 and 400 may also be practiced in a distributed computing environment where functions are performed by remote processing devices that are linked through a communication network. In a distributed computing environment, computer executable instructions may be located in both local and remote computer storage media, including memory storage devices.

The order in which the methods 300 and 400 are described is not intended to be construed as a limitation, and any number of the described method blocks can be combined in any order to implement the methods 300 and 400, or alternative methods. Additionally, individual blocks may be deleted from the methods 300 and 400 without departing from the spirit and scope of the subject matter described herein. Furthermore, the methods 300 and 400 can be implemented in any suitable hardware, software, firmware, or combination thereof.

The method 300 provides a workflow for managing a plurality of change requests. With reference to the method 300 depicted in Fig. 3, at block 302 one or more roles associated with a database 103 may be assigned to a plurality of users. In one implementation, the one or more roles may include a requester, a reviewer, and an administrator. Further, each of the roles may be associated with respective privileges for facilitating the plurality of users to perform operations in relation to the database 103. In one implementation, the worklist module 108 is configured to assign the roles to plurality of users.

At block 304, a plurality of change requests may be received from the at least one requester. In one implementation, the at least one requester may be a developer, a designer, a data architect, a module leader, and the like. The at least one requester may submit the plurality of change requests through the user device 104. The plurality of change requests may include instructions for modifying at least one of a data dictionary, database structure, a master data, and a reference data of the database 103. The plurality of change requests may relate to any addition, deletion, and/or modification in either of the database structure or data (master as well as reference). In one implementation, the worklist module 108 may be configured to receive the plurality of change requests and store them as the request data 220.

At block 306, a first worklist having the plurality of change requests may be generated. In one implementation, the first worklist may be generated, for example, by the worklist module 108 and provided to the at least one reviewer for approving the plurality of change requests in the first worklist. In one implementation, the reviewer may be a software architect, a project leader, and the like. The reviewer may have the privileges of approving a set of change requests from the first worklist. Further, to approve a change request, the reviewer may parse the first worklist before validating one or more change requests.

At block 308, a second worklist may be generated based on the change requests approved, from the first worklist, by the at least one reviewer. The second worklist may include a set of approved change requests. In one implementation, the second worklist may be generated by the worklist module 108. Further, the second worklist may be provided to the at least one administrator for executing one or more approved change requests from the second worklist. In one implementation, the at least one approver may be a database administrator (DBA). In said implementation, the worklist module 108 is configured to execute the one or more approved change requests from the set of approved change requests.

At block 310, the one or more approved change requests from the set of approved change requests may be executed, for example, by the worklist module 108. The execution of the one or more approved change requests from the set of approved change requests may create a plurality of versions of the database 103. In one implementation, each of the plurality of versions of the database 103 may be maintained by the versioning module 110. The versioning module 110 may maintain the plurality of versions of the database 103 within the database 103 and store information related to the plurality of versions as the version data 226.

With reference to the method 400 depicted in Fig. 4, at block 402, the plurality of versions of the database 103 are maintained in the database 103. In one implementation, the plurality of versions may include at least a first and a second version. It will be appreciated, that the reference to the first and the second version is indicative of only the manner in which such versions are selected and not created. Therefore, the first and the second versions of the database 103 may refer to any version that may be selected randomly from amongst the plurality of versions of the database 103 that are maintained in the database 103. For example, a latest version or any previous versions, such as a penultimate or an antepenultimate version of the database 103 may be selected as the first or the second version. In said implementation, the versioning module 110 may be configured to maintain the plurality of versions of the database 103.

At block 404, the first and the second versions of the database 103 may be compared. In an embodiment, the comparison may be based on a comparison request received from a user. The comparison request may relate to a comparison between at least two versions from amongst the plurality of versions of the database 103. In one implementation, the comparison module 212 may be configured to compare the plurality of versions of the database 103.

At block 406, database comparison data (comparison data) may be generated based on the comparison between the first version and the second version. In an embodiment, the differences may be generated at run time and may get stored within the database 103 as comparison data 228. The comparison data 228 may include details about comparisons between various database versions, such as the differences between the compared versions, environments of each of the database version being compared, such as a development environment, a production environment, and a testing environment.

At block 408, the first version and the second version may be synchronized based on the comparison data 228. In an implementation, the comparison module 212 may selectively apply changes to the second version to synchronize the second version with respect to the first version based on the comparison data 228.

## Claims

1. A method comprising:
assigning one or more roles associated with a database to a plurality of users, wherein the roles include at least one requester, at least one reviewer, and at least one administrator, and wherein each of the roles are associated with respective privileges for facilitating the plurality of users to perform operations in relation to the database;
receiving a plurality of change requests from the at least one requester, wherein the plurality of change requests include instructions for modifying at least one of a database structure and master data of the database;
generating a first worklist comprising the plurality of change requests, wherein the first worklist is provided to the at least one reviewer for approval of the plurality of change requests in the first worklist;
generating a second worklist having a set of approved change requests, wherein the set of approved change requests comprises one or more of the plurality of change requests of the first worklist that are approved by the at least one reviewer, and wherein the second worklist is provided to the at least one administrator for executing the one or more approved change requests from the set of approved change requests; and
executing the one or more approved change requests from the set of approved change requests based on the second worklist, wherein the execution of the one or more approved change requests from the set of approved change requests creates a plurality of versions of the database, and wherein each of the plurality of versions is maintained within the database.

2. The method as claimed in claim 1 further comprises tracking each of the plurality of change requests received from the at least one requester.

3. The method as claimed in claim 2, wherein the tracking comprises:
associating a revision number with each of the plurality of change requests received from the at least one requester;
storing the each of the plurality of change requests along with the associated revision numbers within the database such that each of the plurality of stored change requests is retrievable based on the revision numbers; and
monitoring a processing time of the each of the plurality of change requests in accordance with a service level agreement parameter.

4. The method as claimed in claim 1, wherein the generating the second worklist comprises validating a change request based on validation parameters prior to the approval by the at least one reviewer, wherein the validation parameters include stakeholder defined validation parameters.

5. A method comprising:
maintaining a plurality of versions of a database in a database, wherein the plurality of versions comprise at least a first and a second version;
comparing the first and the second versions of the database;
generating database comparison data based on the comparison of the first and the second versions, wherein the database comparison data is stored within the database; and
selectively applying changes to the second version to synchronize the second version with respect to the first version based on the database comparison data.

6. The method as claimed in claim 5, wherein each of the plurality of versions of the database is created in at least one of a development environment, a testing environment, a staging environment, a production environment, and a performance environment.

7. The method as claimed in claim 5, wherein the comparing further comprises,
retrieving one or more of the first version and the second version, wherein the first version and the second version exist in different networks; and
providing comparison details relating to one or more of the first version and the second version, wherein the first version and the second version exist in offline mode.

8. A computer-readable medium having embodied thereon a computer program for executing a method comprising program instructions, the computer program being loadable into a data-processing unit and adapted to cause execution of the method according to claims 1 through 7 when the computer program is run by the data-processing unit.

9. A database version management system (102) comprising:
a processor (202); and
a memory (206) coupled to the processor, the memory (206) comprising:
a worklist module (108) configured to,
receive a plurality of change requests from at least one requester, wherein the plurality of change requests include instructions for modifying at least one of a database structure and a master data of a database (103);
generate a first worklist based on the plurality of change requests, wherein the first worklist is provided to at least one reviewer for approval;
generate a second worklist comprising one or more change requests that are approved by the at least one reviewer based on the first worklist, and wherein the second worklist is provided to at least one administrator for executing one or more change requests included in the second worklist; and
execute the one or more change requests included in the second worklist, wherein the execution of each of the change requests included in the second worklist creates a version of the database (103), and wherein the versions are maintained within the database (103); and
a versioning module (110) configured to,
track a plurality of versions of the database (103), wherein each of the plurality of versions is created by execution of a change request selected from the second worklist; and
maintain the plurality of versions within the database (103).

10. The database version management system (102) as claimed in claim 9, wherein the worklist module (108) is further configured to,
assign one or more roles to a plurality of users associated with the database (103), wherein the roles include the at least one requester, the at least one reviewer, and the at least one administrator, and wherein each of the roles is associated with respective privileges indicative of operations that each of the plurality of users perform in relation to the database (103).

11. The database version management system (102) as claimed in claim 9, wherein the versioning module (110) is further configured to,
associate a revision number with each of the plurality of change requests received from the at least one requester; and
store the each of the plurality of change requests along with the associated revision numbers within the database (103) such that each of the plurality of stored change requests is tracked based on the revision numbers.

12. The database version management system (102) as claimed in claim 9 further comprising a comparison module (212) configured to,
compare at least two versions of the plurality of versions of the database (103), based on a compare request;
generate database comparison data based on the comparison of the at least two versions, wherein the database comparison data is stored within the database (103); and
synchronize the at least two versions based on the database comparison data.

13. The database version management system (102) as claimed in claim 12, wherein the at least two versions compared by the comparison module (212) are based on different database technologies.

14. The database version management system (102) as claimed in claim 12 further comprising a reporting module (214) configured to provide a report based on the database comparison data.

15. The database version management system (102) as claimed in claim 9, wherein each of the plurality of versions is configured to support multiple applications, and wherein the applications comprise one or more of a payroll application, a customer relationship management application, an enterprise resource planning application, and a human resource management application.
